(19) Europäisches Patentamt
European Patent Office
Office européen des brevets

(11) **EP 4 194 879 A1**

(12) **EUROPEAN PATENT APPLICATION**

(43) Date of publication:
**14.06.2023 Bulletin 2023/24**

(21) Application number: **21212803.7**

(22) Date of filing: **07.12.2021**

(51) International Patent Classification (IPC):
***G01S 1/02*** *(2010.01)*      ***G01S 5/02*** *(2010.01)*

(52) Cooperative Patent Classification (CPC):
**G01S 1/024; G01S 5/021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **u-blox AG
8800 Thalwil (CH)**

(72) Inventors:
- **Krantz, Jakob
  8800 Thalwil (CH)**
- **Karlsson, Peter
  8800 Thalwil (CH)**

(74) Representative: **Epping - Hermann - Fischer
Patentanwaltsgesellschaft mbH
Schloßschmidstraße 5
80639 München (DE)**

(54) **ANCHOR POINT, POSITIONING ENGINE, POSITIONING SYSTEM AND METHOD FOR CALIBRATING AN ANCHOR POINT**

(57)     An anchor point (ANC) for a positioning system comprises an antenna array (AA), a communication unit being coupled to the antenna array (AA) for enabling transmission of a direction finding signal between the antenna array (AA) and a mobile device (TG), and an orientation sensor (OS) that is configured to determine an antenna orientation of the antenna array (AA). The antenna orientation defines a local coordinate system of the antenna array (AA) with respect to a global coordinate system.

**Fig 1**

EP 4 194 879 A1

**Description**

TECHNICAL FIELD

This disclosure relates to an anchor point in a positioning system, to a positioning engine in a positioning system and to a positioning system with such anchor points and such positioning engine. The disclosure further relates to a method for calibrating an anchor point, a computer program product and a computer readable storage medium.

BACKGROUND ART

In many applications like indoor positioning systems, IPS, or real-time location services, RTLS, one key element is to determine a position of a mobile device like a tag based on position information relative to multiple anchor points. Such determination is for example performed in a positioning engine using various mathematical models.

In conventional approaches, an accuracy of the determined position of the mobile device depends on the accuracy of the relative position information of each anchor point. This includes good knowledge not only of the position of each anchor point but also of their orientation relative to a given coordinate system. Conventionally, when installing an anchor point, a specific orientation is chosen manually or mechanically or the orientation after installation is measured and manually input into the positioning system as a basis for the mathematical models.

SUMMARY OF INVENTION

An object to be achieved is to provide an improved calibration concept that allows an easier calibration of an orientation of an anchor point.

This object is achieved with the subject-matter of the independent claims. Embodiments and developments derive from the dependent claims.

The present disclosure is based on the principle that a direction finding signal is transmitted between a mobile device and an anchor point in a positioning system, which enables determination of a direction between the mobile device and the anchor point. To this end the anchor point, which may be a stationary device, comprises an antenna array and a communication unit, which is coupled to the antenna array. In particular, the communication unit enables transmission of a direction finding signal between the antenna array and the mobile device, e.g. from the antenna array to the mobile device or from the mobile device to the antenna array.

As a direction between the anchor point and the mobile device is regularly first determined in a local coordinate system of the anchor point, in particular of the antenna array of the anchor point, based on the transmitted direction finding signal, the direction in the local coordinate system needs to be transformed into a global coordinate system of the positioning system. For such a transformation, the orientation of the anchor point, respectively its antenna array, can be used. The improved calibration concept is based on the insight that even if an initial orientation of the anchor point can be mechanically measured or defined, desired or arbitrary changes in the orientation cannot be easily accounted for. To this end, the improved calibration concept uses an orientation sensor in the anchor point that is configured to determine an antenna orientation of the antenna array. The antenna orientation defines the local coordinate system of the antenna array with respect to a global coordinate system, e.g. of the positioning system.

The antenna orientation is for example based on a physical orientation of an antenna array of the anchor point with respect to the global coordinate system. For example, such an antenna array comprises two or more linear arrays that usually form a plane in space. That plane, respectively the physical orientation of the plane, may be the basis for deriving the antenna orientation.

Accordingly, in an embodiment of an anchor point in a positioning system according to the improved calibration concept, the anchor point further comprises the orientation sensor as described.

Hence, accuracy of an angle of arrival, AoA, respectively angle of departure, AoD, between anchor point and mobile device can be improved compared to manual setup which is prone to human errors and not as accurate as an automatic setup. A small error in the configuration may result in a large error in later estimation which is eliminated by the automatic configuration.

For example, the antenna orientation determined by the orientation sensor comprises an azimuth angle and a tilt angle of the antenna array with respect to the global coordinate system. For example, these two angles allow a well-defined transformation of directions between the two coordinate systems.

In various implementations the orientation sensor comprises at least one of a gyroscope, an accelerometer, a magnetometer and an electronic compass sensor. For example, an accelerometer is able to measure accelerations in three spatial axes, thereby using the known earth acceleration g. A magnetometer is a device that measures magnetic field or magnetic dipole moment. For example, the earth's magnetic field can be measured, such that an orientation with respect to the surface of the earth can be determined. Further, magnetometers can be used for determining headings.

A gyroscope is able to measure orientation and angular velocity. For example, a gyroscope can be implemented as a microchip packaged MEMS gyroscope. Also a compass sensor is able to determine its orientation based on the earth's magnetic field.

Generally, the antenna orientation may be measured by the orientation sensor as an absolute orientation with respect to e.g. the earth's surface or earth's magnetic field. However, such measurement may be transformed to a measurement relative to the coordinate system of the positioning system taking into account a known relative orientation of the coordinate system of the positioning system with respect to the absolute orientation. Hence, in any case, the antenna orientation defines the local coordinate system of the antenna array with respect to a global coordinate system.

In various implementations the anchor point may be configured to perform the transformation of a determined direction and a local coordinate system into the global coordinate system, such that the transformed direction in the global coordinate system is transmitted to a positioning engine for further processing. However, in some implementations the anchor point is configured to provide the determined antenna orientation to the positioning engine during an initial setup phase and/or repeatedly. In such a case the anchor point may provide the direction in the local coordinate system to the positioning engine, which performs the transformation into the global coordinate system using the previously provided antenna orientation.

Providing the antenna orientation during an initial setup phase may reduce the setup time when installing the anchor point in the positioning system. Determining and providing the antenna orientation repeatedly to the positioning engine for example allows the overall positioning system to account for arbitrary deviations of the antenna orientation, e.g. due to accidental modifications to the anchor point. For example, the antenna orientation may change due to mechanical changes to the anchor point, e.g. through cleaning personnel or maintenance alterations or other demands for slightly moving an anchor point. Also in such cases the changed orientation can be taken into account with the improved calibration concept.

The anchor point, for example, comprises a memory that is configured to store the determined antenna orientation. In such a case the anchor point may be configured to provide a change information to the positioning engine if a further antenna orientation determined with the orientation sensor deviates from the stored antenna orientation. Hence, not only the actual orientation is provided to the positioning engine, but also the information itself that a change in orientation has happened.

For example, the anchor point is configured to provide the change information to the positioning engine, if deviation between the further antenna orientation and the stored antenna orientation is larger than a threshold. For example, if the antenna orientation changes more than a given angular threshold, e.g. between 5° and 15°, an alarm could be triggered by the positioning engine, respectively the positioning system, e.g. for checking the source of the change in orientation. However, depending on the accuracy of the orientation sensor, the threshold may also be smaller, e.g. in the range between 1° or 2° and 15°.

The antenna orientation may also be stored as a rotation matrix, which mathematically performs a rotation of a local directional vector in the local coordinate system to a global directional vector in the global coordinate system.

In a further embodiment of the improved calibration concept, a positioning engine for determining a position of a mobile device in a positioning system is provided. The positioning engine is configured to receive, for a plurality of anchor points, respective direction information between the respective anchor point and the mobile device, wherein at least one anchor point of the plurality of anchor points is an anchor point according to one of the implementations described above, i.e. comprising an orientation sensor. The positioning engine is further configured to receive, from the at least one anchor point, the antenna orientation of the antenna array of the at least one anchor point, and to determine an estimated position of the mobile device based on the respective direction information and the received antenna orientation.

Hence, at least for the anchor points having an orientation sensor, the antenna orientation of the these anchor points, respectively corresponding rotation matrices, do not have to be manually input into the positioning engine, but are available automatically. This further reduces the installation effort when installing anchor points into the positioning system.

It should be apparent to the skilled reader that the positioning engine may collaborate with more than one of such anchor points that are equipped with an orientation sensor as described above, or even all anchor points being in communication with the positioning engine may be implemented with orientation sensors.

For example, if the anchor point is implemented such that it provides change information if the antenna orientation changes, the positioning engine may be configured to trigger an alarm message if the change information is received from the at least one anchor point.

The anchor point and/or the positioning engine may be configured to store a known anchor position of the anchor point within the global coordinate system for determination of a position of a mobile device.

The positioning engine may be a local positioning engine being located in the same area respectively the same local network as the anchor points or even being part of one of the anchor points. However, the positioning engine may also be implemented as a service component in a network cloud, e.g. over the internet. In some implementations the positioning engine respectively its function may be distributed between an anchor point and a service component in a network cloud. Other implementations should not be excluded by these examples.

In a further embodiment according to the improved calibration concept, a positioning system comprises a plurality of anchor points, wherein at least one anchor point of the plurality of anchor points is an anchor point according to the improved calibration concept comprising an orientation sensor, and a positioning engine according to one of the implementations described above. This allows for an easier and faster setup of the positioning system when the anchor points are being installed and the positioning engine is being configured.

In an embodiment of a method for calibrating an anchor point in a positioning system according to the improved calibration concept, the anchor point comprises an antenna array and an orientation sensor. The method comprises determining the antenna orientation of the antenna array using the orientation sensor. Also here the antenna orientation defines a local coordinate system of the antenna array with respect to a global coordinate system, e.g. of the positioning system. The anchor point may further comprise a communication unit being coupled to the antenna array for enabling transmission of a direction finding signal between the antenna array of the anchor point and a mobile device.

For example, the determined antenna orientation is provided to a positioning engine during an initial setup phase and/or repeatedly.

Further implementations of the calibration method become apparent from the various implementations described above for the anchor point and positioning engine.

According to one embodiment of the improved calibration concept, a computer program product comprises instructions that may be stored in a preferably non-transitory computerreadable storage medium, the instructions enabling, when executed on a processor of an anchor point having an antenna array and an orientation sensor, the processor to execute a method according to one of the implementations described above.

Furthermore, an anchor point with an antenna array and an orientation sensor may have one or more processors and a storage medium having computer program instructions stored therein, enabling the one or more processors to execute a method according to one of the implementations described above.

BRIEF DESCRIPTION OF DRAWINGS

The improved calibration concept will be explained in more detail in the following with the aid of the drawings. Elements and functional blocks having the same or similar function bear the same reference numerals throughout the drawings. Hence their description is not necessarily repeated in following drawings.

In the drawings:

Figure 1       shows an example positioning system with a mobile device;

Figure 2       shows an example antenna array;

Figure 3       shows an example vector with a spherical coordinates definition;

Figure 4       shows an example 3D view of an anchor point and a mobile device;

Figure 5       shows an example 3D view of an anchor point having an orientation in a global coordinate system;

Figure 6       shows an example 3D view of several anchor points having an orientation in a global coordinate system;

Figures 7 to 10    show example 3D views of an anchor point with different rotated orientations in a global coordinate system; and

Figure 11      shows an example 3D view of an antenna array in a global coordinate system.

DETAILED DESCRIPTION

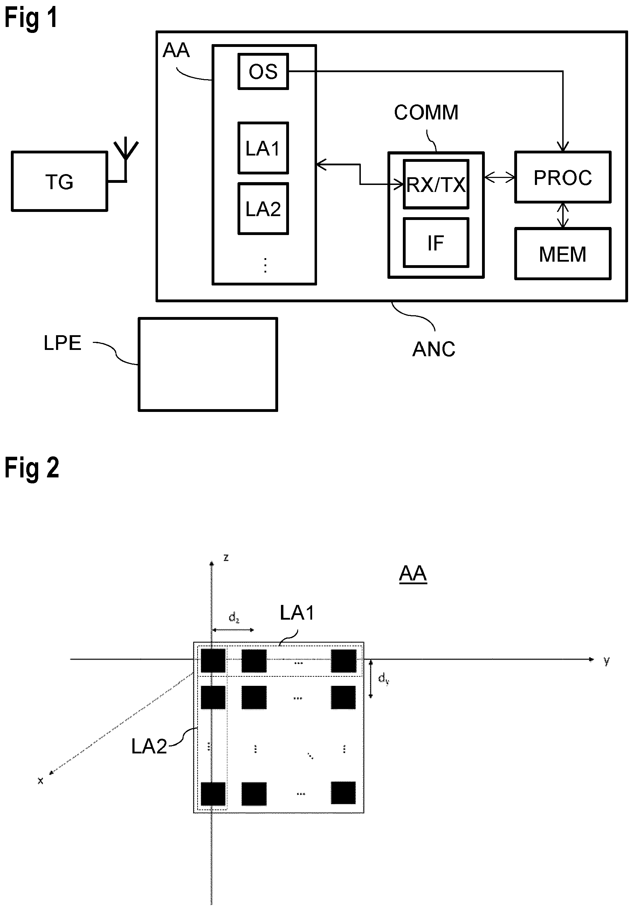

Figure 1 shows an example implementation of a positioning system with a mobile device TG. The positioning system comprises a positioning engine LPE and a plurality of anchor points, from which only one anchor point ANC is depicted for reasons of a better overview. The anchor point ANC comprises a processing unit PROC, a memory MEM, a communication unit COMM and an antenna array AA. The communication unit COMM comprises a receiver RX, a transmitter TX or a transceiver RX/TX which are coupled to the antenna array AA, and a communication interface IF, which for example serves for communication with the positioning engine LPE. The antenna array AA of the anchor point ANC is suitable for AoA, respectively AoD, such that a direction finding signal is either transmitted from the mobile device TG to the antenna array AA or vice versa. For example, the antenna array AA comprises two or more linear arrays LA1, LA2 that, for example, form a plane in space.

Referring now to Figure 2, an example implementation of such an antenna array AA comprises a plurality of antenna elements arranged in a rectangular fashion. Serving only as an example, linear arrays LA1 and LA2 are formed from these antenna elements. Further linear arrays may be formed from one or more of the antenna elements of the antenna array. The linear arrays LA1, LA2 form a plane in space, which is in the y-z plane in this example. That plane, respectively the orientation of the plane, may define the antenna orientation in a global coordinate system.

Referring back to Figure 1, the anchor point ANC further comprises an orientation sensor OS that is configured to determine the antenna orientation of the antenna array AA, such that a local coordinate system of the antenna array AA is defined with respect to the global coordinate system, e.g. of the positioning system.

The orientation sensor OS may comprise one or more of a gyroscope, an accelerometer, a magnetometer and an electronic compass sensor.

The determined antenna orientation may be provided to the positioning engine LPE, e.g. during an initial setup phase and/or repeatedly. The current antenna orientation and/or previously determined antenna orientations may be stored in the memory MEM, e.g. in the form of a rotation matrix. This allows to e.g. determine whether a current antenna orientation deviates from a stored antenna orientation. For example, if a deviation between an actual antenna orientation and the stored antenna orientation is larger than a threshold, a change information may be provided to the positioning engine. Furthermore, the positioning engine may trigger an alarm message, if such change information is received from the anchor point ANC. Hence, arbitrary changes in the antenna orientation, e.g. due to mechanical changes to the anchor point through cleaning personnel or maintenance alterations, may be detected and can be reported for taking appropriate measures, e.g. correcting a changed orientation of the anchor point ANC to a desired orientation.

The mobile device TG can be a tag that transmits or receives the direction finding signal as a radio frequency, RF, signal, like a Bluetooth direction finding signal, which includes a constant tone extension packet, CTE. Other RF signals like Wi-Fi signals, Ultra-wideband, UWB, or cellular signals could be used as an alternative, for example.

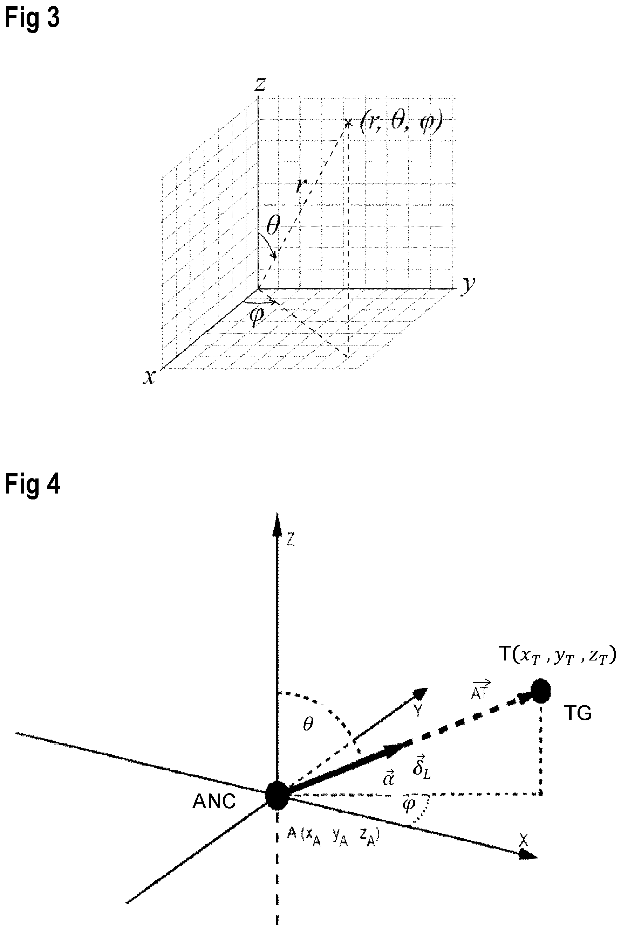

Referring now to Figure 3, a definition of spherical coordinates is shown that is going to be used in this disclosure for explaining the principle of direction information and directional vectors.

In mathematics, a spherical coordinate system is a coordinate system for three-dimensional space where the position of a point is specified by three numbers: the radial distance r of that point from a fixed origin, its polar angle $\theta$ measured from a fixed zenith direction, and the azimuthal angle $\varphi$ of its orthogonal projection on a reference plane that passes through the origin and is orthogonal to the zenith, measured from a fixed reference direction on that plane.

The spherical coordinates vary at the following range:

$$r \geq 0$$
$$0 \leq \theta \leq \pi \qquad\qquad (1)$$
$$0 \leq \varphi < 2\pi \quad \text{or} \quad -\pi < \varphi \leq \pi$$

The transformation between spherical and Cartesian coordinates is given by the following formulas:

$$r = \sqrt{x^2 + y^2 + z^2}$$

$$\theta = \cos^{-1}\left(\frac{z}{\sqrt{x^2 + y^2 + z^2}}\right) = \tan^{-1}\left(\frac{\sqrt{x^2 + y^2}}{z}\right) \qquad (2)$$

$$\varphi = \tan^{-1}\left(\frac{y}{x}\right)$$

$$x = r \cos\varphi \sin\theta$$
$$y = r \sin\varphi \sin\theta \qquad\qquad (3)$$
$$z = r \cos\theta$$

Referring back to Figure 1, in an AoA configuration, the anchor point ANC may be configured to determine a direction between the mobile device TG and the anchor point ANC in a local coordinate system of the anchor point ANC based on the transmitted direction finding signal. Such a direction may be called a local direction. In an AoD configuration the local direction may be determined by the mobile device TG.

For example, referring to Figure 4, the anchor point ANC, which is located at the origin of its local coordinate system at the position $A(x_A, y_A, z_A)$, determines the two angles $\varphi$ and $\theta$ with respect to the mobile device TG at the position $T(x_T, y_T, z_T)$. From the angles $\varphi$ and $\theta$ the local direction can be determined, e.g. as a local directional vector.

Assuming that the anchor point ANC, respectively its antenna array AA, can be rotated with respect to the global coordinate system, an antenna orientation of the anchor point ANC is determined that defines the local coordinate system of the antenna array AA with respect to the global coordinate system. Accordingly, a global direction between the mobile device TG and the anchor point ANC is determined in the global coordinate system based on the determined local direction and the stored antenna orientation.

Assuming that the coordinates $(x_A, y_A, z_A)$ of the anchor point ANC and $(x_T, y_T, z_T)$ of the mobile device TG are defined in the global coordinate system, from the perspective of this global coordinate system, the direction from the anchor towards the target is defined by the vector:

$$\overrightarrow{AT} = \begin{bmatrix} x_T - x_A \\ y_T - y_A \\ z_T - z_A \end{bmatrix} \tag{4}$$

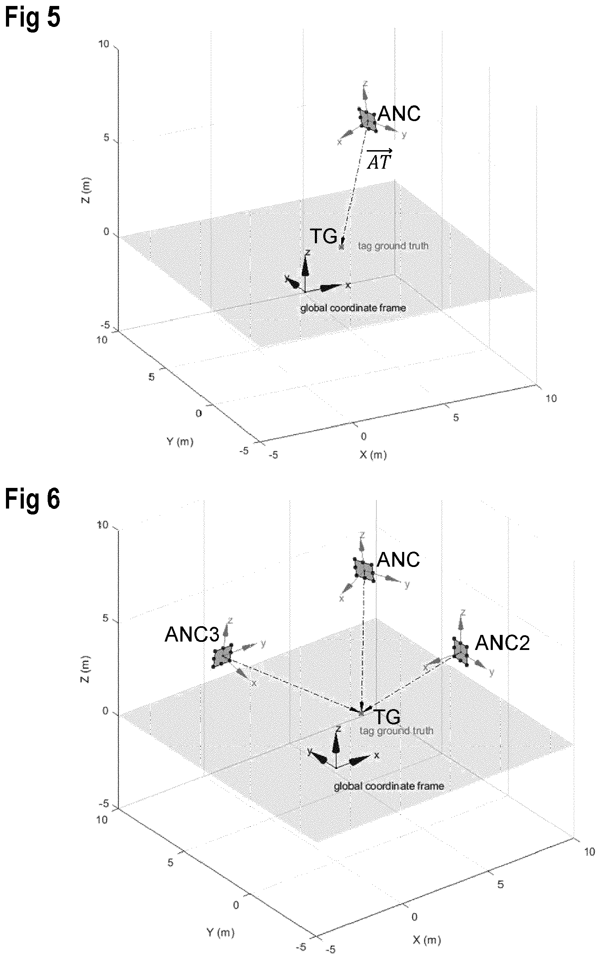

This vector $\overrightarrow{AT}$ is depicted in Figure 4 and Figure 5 and is determined as a third direction. Figure 5 shows an example of the orientation of the anchor point ANC within the global coordinate system.

From the perspective of the anchor's ANC local coordinate system the direction from the anchor ANC towards the mobile device TG is defined by the unit directional vector $\overrightarrow{\delta_L}$ corresponding to the local direction:

$$\vec{\delta}_L = \begin{bmatrix} \delta_{Lx} \\ \delta_{Ly} \\ \delta_{Lz} \end{bmatrix} = \begin{bmatrix} cos\varphi \cdot sin\theta \\ sin\varphi \cdot sin\theta \\ cos\theta \end{bmatrix} \tag{5}$$

These two vectors $\overrightarrow{AT}$ and $\overrightarrow{\delta_L}$, as mathematical objects, need to be parallel. But before we exploit their parallelism, we must express the vector $\overrightarrow{\delta_L}$ in its equivalent form with respect to the global coordinate system. To achieve such a goal we use the Euler's angles and the corresponding rotation matrix

$$R_A = \begin{bmatrix} r_{11} & r_{12} & r_{13} \\ r_{21} & r_{22} & r_{23} \\ r_{31} & r_{32} & r_{33} \end{bmatrix} \tag{6}$$

The exact calculations needed for the generation of the rotation matrix of the anchor point ANC will be explained in more detail below.

Using the rotation matrix, we express the vector $\overrightarrow{\delta_L}$ to its equivalent $\vec{\delta}$ in the global coordinate system:

$$\vec{\delta} = R_A \cdot \vec{\delta}_L = \begin{bmatrix} r_{11} & r_{12} & r_{13} \\ r_{21} & r_{22} & r_{23} \\ r_{31} & r_{32} & r_{33} \end{bmatrix} \cdot \begin{bmatrix} \delta_{Lx} \\ \delta_{Ly} \\ \delta_{Lz} \end{bmatrix}$$

$$= \begin{bmatrix} r_{11} & r_{12} & r_{13} \\ r_{21} & r_{22} & r_{23} \\ r_{31} & r_{32} & r_{33} \end{bmatrix} \cdot \begin{bmatrix} cos\varphi \cdot sin\theta \\ sin\varphi \cdot sin\theta \\ cos\theta \end{bmatrix} = \begin{bmatrix} \delta_x \\ \delta_y \\ \delta_z \end{bmatrix} \tag{7}$$

The unit directional vector $\vec{\delta}$ corresponds to the global direction and is expressed in terms of the global coordinate system. The unit directional vector needs to be parallel with the vector $\overrightarrow{AT}$. Hence, we get the equation of a straight line that is determined by the anchor point ANC and the mobile device TG:

$$\boxed{\overrightarrow{AT} \parallel \vec{\delta}}$$

$$\Rightarrow \begin{cases} \dfrac{x_T - x_A}{y_T - y_A} = \dfrac{\delta_x}{\delta_y} \\ \dfrac{y_T - y_A}{z_T - z_A} = \dfrac{\delta_y}{\delta_z} \end{cases} \Rightarrow \boxed{\begin{cases} \delta_y x_T - \delta_x y_T = \delta_y x_A - \delta_x y_A \\ \delta_z y_T - \delta_y z_T = \delta_z y_A - \delta_y z_A \end{cases}} \qquad (8)$$

Figure 6 shows an example 3D view of several anchor points ANC, ANC2, ANC3 having respective antenna orientations in the global coordinate system, together with a mobile device TG.

The above equation (8) is the building block of the algorithm which combines several anchor points that provide direction information and allow us to determine the position of the mobile device TG. Namely, let us suppose that we have a room with N anchors, for example the room depicted in Figure 6, where N = 3.

Using equation (8) for each one of the anchor points ANC, ANC2, ANC3, we create the following matrix equation using the following notation:

Unknown mobile device's position:

$$X = \begin{bmatrix} x \\ y \\ z \end{bmatrix}$$

Position of each anchor point:

$$A_i(x_i, y_i, z_i) \,, \;\; 1 \le i \le N$$

Unit directional vector of each anchor point, calculated in terms of the global coordinate system:

$$\vec{\delta_i} = \begin{bmatrix} \delta_{ix} \\ \delta_{iy} \\ \delta_{iz} \end{bmatrix}$$

Combination of all pieces of AoA information of all anchor points in one matrix equation:

$$\overbrace{\begin{bmatrix} \delta_{1y} & -\delta_{1x} & 0 \\ 0 & \delta_{1z} & -\delta_{1y} \\ \delta_{2y} & -\delta_{2x} & 0 \\ 0 & \delta_{2z} & -\delta_{2y} \\ \vdots & \vdots & \vdots \\ \delta_{iy} & -\delta_{ix} & 0 \\ 0 & \delta_{iz} & -\delta_{iy} \\ \vdots & \vdots & \vdots \\ \delta_{Ny} & -\delta_{Nx} & 0 \\ 0 & \delta_{Nz} & -\delta_{Ny} \end{bmatrix}}^{H} \cdot \overbrace{\begin{bmatrix} x \\ y \\ z \end{bmatrix}}^{X} = \overbrace{\begin{bmatrix} \delta_{1y} x_1 - \delta_{1x} y_1 \\ \delta_{1z} y_1 - \delta_{1y} z_1 \\ \delta_{2y} x_2 - \delta_{2x} y_2 \\ \delta_{2z} y_2 - \delta_{2y} z_2 \\ \vdots \\ \delta_{iy} x_i - \delta_{ix} y_i \\ \delta_{iz} y_i - \delta_{iy} z_i \\ \vdots \\ \delta_{Ny} x_N - \delta_{Nx} y_N \\ \delta_{Nz} y_N - \delta_{Ny} z_N \end{bmatrix}}^{B} \qquad (9)$$

We solve equation (9) for X, using the Moore-Penrose inverse and we get the least square (LS) estimation $\hat{X}$ of the mobile device's TG position:

$$\boxed{HX = B} \Rightarrow \hat{X} = [(H^T H)^{-1} H^T]B \qquad (10)$$

The above analysis is also valid in the case where the mobile device TG measures the AoD with respect to the anchor and the anchor point's local coordinate system. The only difference is that the vector $\vec{\delta_L}$ is being calculated by the mobile device TG.

The positioning engine approach given by equation (9) is just a case study. In general, an anchor point that measures AoA or helps a mobile device to measure AoD, can be part of a more generic localization system which combines more types of measurements. In such a case, regardless the type of information provided by the other anchors or sensors, an anchor that provides AoA/AoD has to conduct the transformation described by equation (7).

**Calculation of the rotation matrix**

Suppose we have an anchor point ANC in the space with its local coordinate system whose origin has been placed at the point $(x_a, y_a, z_a)$. Moreover, the axes of the anchor point's local coordinate system are parallel to the corresponding axes of the global coordinate system, as shown in Figure 6.

If we consider a vector

$$\vec{\delta_L} = \begin{bmatrix} x_0 \\ y_0 \\ z_0 \end{bmatrix}$$

with respect to the local coordinate system and then we construct the vector

$$\vec{\delta} = \begin{bmatrix} x_0 \\ y_0 \\ z_0 \end{bmatrix}$$

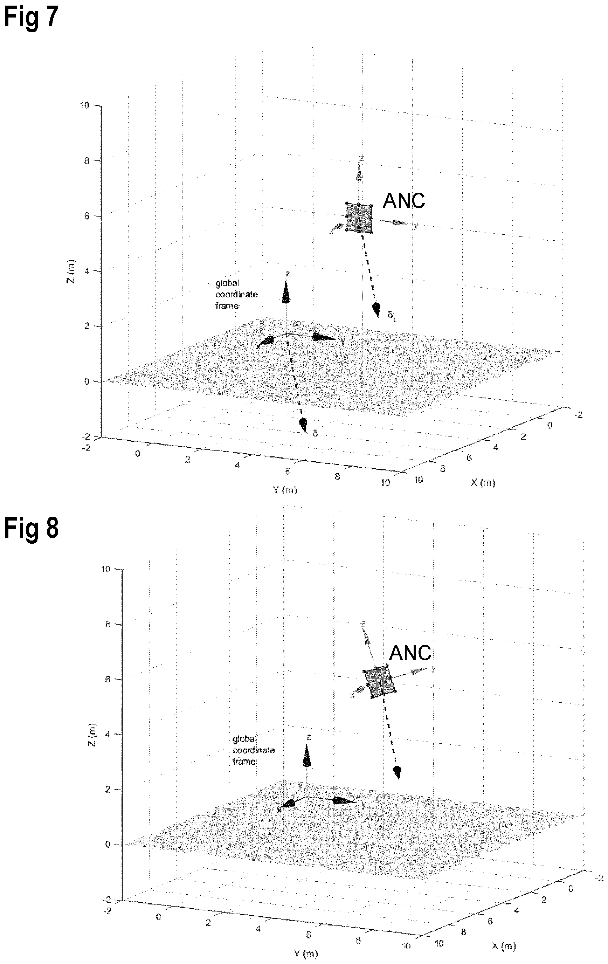

with respect to the global coordinate system, these two vectors will be parallel as can be seen in Figure 7.

So, in the case where the anchor point's local coordinate system stems from the global coordinate system by a parallel movement of the axes, there is no need for coordinate translation if we care for the direction of the vectors only. In such case, the corresponding rotation matrix will be the 3×3 identity matrix $I_3$.

In general, the anchor point's local coordinate system can have any arbitrary orientation in the space, with respect to the global one and the above property is not valid. We can analyze this orientation in a finite sequence of successive rotations around one axis each time and construct easily a resulting rotation matrix.

**Rotation around x-axis**

Referring now to Figure 8, the local coordinate system has been rotated by an angle $\omega_x$ around the axis *x.* Considering that all coordinate systems are "right-handed", the positive direction of rotation around each axis is given by the "right-hand rule". For example, in Figure 8 it holds that $\omega_x = +20°$.

The rotation matrix, when we have a rotation around axis *x,* will be given by the following formula:

$$R_x = \begin{bmatrix} 1 & 0 & 0 \\ 0 & \cos\omega_x & -\sin\omega_x \\ 0 & \sin\omega_x & \cos\omega_x \end{bmatrix} \qquad (11)$$

**Rotation around y-axis**

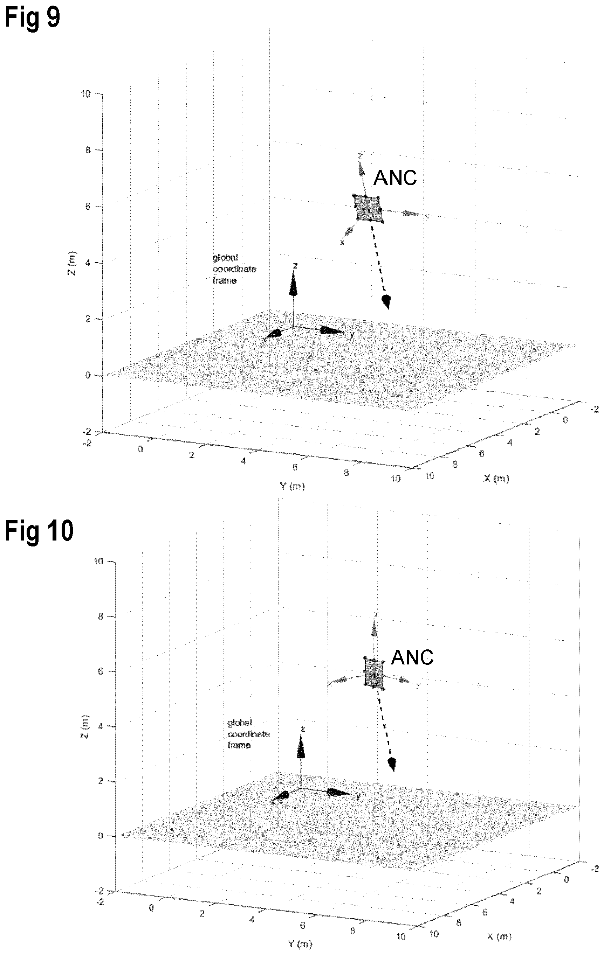

With a similar way we define the rotation matrix when a rotation around axis *y* has happened. For example, in Figure 9 the anchor point's square antenna array has been rotated around the *y* axis by $\omega y = +20°$ and the same is valid for its local coordinate system.

The rotation matrix around axis *y* is given by the following formula:

$$R_y = \begin{bmatrix} \cos \omega_y & 0 & \sin \omega_y \\ 0 & 1 & 0 \\ -\sin \omega_y & 0 & \cos \omega_y \end{bmatrix} \qquad (12)$$

**Rotation around z-axis**

We handle any rotation around axis z with a similar way. In Figure 10 an example of an anchor that has been rotated by $\omega_z$ =-20° is being depicted. The general form of the corresponding rotation matrix around the z axis is given by the following equation:

$$R_z = \begin{bmatrix} \cos \omega_z & -\sin \omega_z & 0 \\ \sin \omega_z & \cos \omega_z & 0 \\ 0 & 0 & 1 \end{bmatrix} \qquad (13)$$

The three rotation matrices described by equations (11), (12) and (13) are the building blocks that allow us to construct the rotation matrix for any arbitrary orientation of the anchor's local coordinate system. It can be proven that every orientation can be derived by a finite sequence of rotations around the three axes. The aggregated rotation matrix is the product of the corresponding rotation matrices. For example, the rotation angles $\omega_x$, $\omega_y$ and $\omega_z$ may be determined with the orientation sensor OS.

Let us examine an example where we apply three rotations. For example, the first rotation is around the *y* axis by an angle $\omega_y^{(1)}$. The new coordinate system that has been derived, is going to be rotated by its *x* axis by $\omega_x^{(2)}$. Again, we derive a new coordinate system, which we are rotating around its z axis by $\omega_z^{(3)}$.

The rotation matrix of the final coordinate system is given by the product of the three matrices which describe the three rotation steps:

$$R^{(123)} = R_y^{(1)} \cdot R_x^{(2)} \cdot R_z^{(3)}$$

$$= \begin{bmatrix} \cos \omega_y^{(1)} & 0 & \sin \omega_y^{(1)} \\ 0 & 1 & 0 \\ -\sin \omega_y^{(1)} & 0 & \cos \omega_y^{(1)} \end{bmatrix} \cdot \begin{bmatrix} 1 & 0 & 0 \\ 0 & \cos \omega_x^{(2)} & -\sin \omega_x^{(2)} \\ 0 & \sin \omega_x^{(2)} & \cos \omega_x^{(2)} \end{bmatrix} \cdot \begin{bmatrix} \cos \omega_z^{(3)} & -\sin \omega_z^{(3)} & 0 \\ \sin \omega_z^{(3)} & \cos \omega_z^{(3)} & 0 \\ 0 & 0 & 1 \end{bmatrix} \qquad (14)$$

The number of the rotation steps and the axis that is going to be used at each step are the choice of the designer. The rotation matrix $R^{(123)}$ represents the antenna orientation of the antenna array AA.

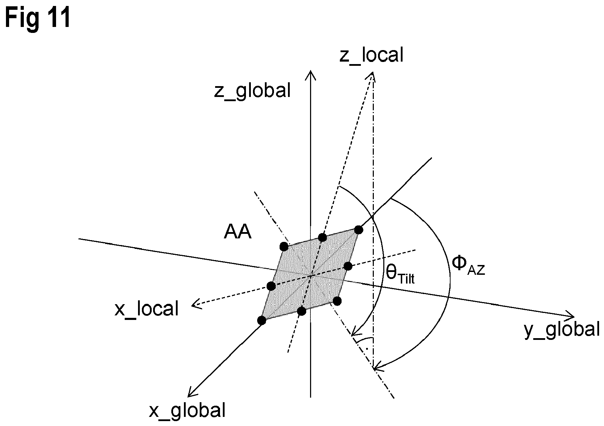

Referring now to Figure 11, the antenna orientation can also be expressed with an azimuth angle $\Phi_{AZ}$ and a tilt angle $\theta_{Tilt}$ of the antenna array AA with respect to the global coordinate system. For example, Figure 11 shows a global coordinate system with global coordinate axes x_global, y_global and z_global together with the antenna array AA, for which only the local axes x_local and z_local defining its local coordinate system are shown. Furthermore an orthogonal projection of the axis z_local into the plane defined by axes x_global, y_global is shown. The angle between the axis z_local and this projection defines the tilt angle $\theta_{Tilt}$. The angle between the axis x_global and this projection defines the azimuth angle $\Phi_{AZ}$.

The rotation matrix $R^{(123)}$ resulting in equation (14) can also be derived from such azimuth angle $\Phi_{AZ}$ and tilt angle $\theta_{Tilt}$ of the antenna array AA.

It should be noted that the tilt angle $\theta_{Tilt}$ and the azimuth angle $\Phi_{AZ}$ are not to be confused with the two angles $\varphi$ and $\theta$ shown in Figure 4 and used e.g. in equation (5) for a representation of the unit directional vector $\vec{\delta_L}$.

It is evident that any errors in the calculation of the rotation matrix of an anchor point will propagate in the positioning engine functionality as described above in conjunction with equations (7), (8) and (9). Errors in the rotation matrix of the anchor point ANC will produce significant errors in the mobile device's TG position estimation in the positioning engine LPE, even if the environment is almost multipath-free.

Hence, the respective antenna orientation of one or more anchor points determined with a respective orientation sensor not only allows an easier and faster setup of the positioning system, but also leads to a positioning system being able to determine positions of mobile devices with a higher accuracy. Furthermore, if a course of respective determined antenna orientations is tracked, unwanted deviations can be detected and eventually reported to an administrator of the positioning system. Hence, appropriate measures can be taken, such as ordering maintenance for the affected anchor point and/or even disabling the anchor point if the changed antenna orientation does not allow useful operation of the affected anchor point, for example. However, if the antenna orientation only changes slightly, for example, the changed antenna orientation can simply be taken into account in the position estimation process without further involvement of maintenance personnel or the like.

LIST OF REFERENCE SIGNS

| ANC, ANC2, ANC3 | anchor points |
|---|---|
| AA | antenna array |
| LA1, LA2 | linear array |
| TG | mobile device |
| LPE | positioning engine |
| PROC | processing unit |
| MEM | memory |
| COMM | communication unit |
| OS | orientation sensor |
| RX | receiver |
| TX | transmitter |
| IF | interface |

**Claims**

1. An anchor point (ANC) for a positioning system, the anchor point comprising

    - an antenna array (AA);
    - a communication unit, which is coupled to the antenna array (AA), for enabling transmission of a direction finding signal between the antenna array (AA) and a mobile device (TG); and
    - an orientation sensor (OS) that is configured to determine an antenna orientation of the antenna array (AA), the antenna orientation defining a local coordinate system of the antenna array (AA) with respect to a global coordinate system.

2. The anchor point (ANC) according to claim 1, wherein the antenna orientation determined by the orientation sensor (OS) comprises an azimuth angle and a tilt angle of the antenna array (AA) with respect to the global coordinate system.

3. The anchor point (ANC) according to claim 1 or 2, wherein the orientation sensor (OS) comprises at least one of the following:

    - a gyroscope;
    - an accelerometer;
    - a magnetometer;
    - an electronic compass sensor.

4. The anchor point (ANC) according to one of claims 1 to 3, wherein the anchor point (ANC) is configured to provide the determined antenna orientation to a positioning engine (LPE) during an initial setup phase and/or repeatedly.

5. The anchor point (ANC) according to claim 4, further comprising a memory (MEM) that is configured to store the determined antenna orientation, wherein the anchor point (ANC) is configured to provide a change information to the positioning engine (LPE) if a further antenna orientation determined with the orientation sensor (OS) deviates from the stored antenna orientation.

6. The anchor point (ANC) according to claim 5, wherein the anchor point (ANC) is configured to provide the change information to the positioning engine (LPE), if a deviation between the further antenna orientation and the stored antenna orientation is larger than a threshold.

7. A positioning engine (LPE) for determining a position of a mobile device (TG) in a positioning system, the positioning engine (LPE) being configured

- to receive, for a plurality of anchor points, respective direction information between the respective anchor point (ANC, ANC2, ANC3) and the mobile device (TG), wherein at least one anchor point of the plurality of anchor points is an anchor point (ANC) according to one of claims 1 to 6;
- to receive, from the at least one anchor point (ANC), the antenna orientation of the antenna array (AA) of the at least one anchor point (ANC); and
- to determine an estimated position of the mobile device (TG) based on the respective direction information and the received antenna orientation.

8. The positioning engine (LPE) according to claim 7, wherein at least one anchor point of the plurality of anchor points is an anchor point (ANC) according to claim 5 or 6, and wherein the positioning engine (LPE) is configured to trigger an alarm message, if the change information is received from the at least one anchor point.

9. A positioning system comprising

- a positioning engine (LPE) according to claim 7 or 8; and
- a plurality of anchor points, wherein at least one anchor point of the plurality of anchor points is an anchor point (ANC) according to one of claims 1 to 6.

10. A method for calibrating an anchor point (ANC) in a positioning system, the anchor point comprising an antenna array (AA) and an orientation sensor (OS), the method comprising:

- determining an antenna orientation of the antenna array (AA) using the orientation sensor (OS), the antenna orientation defining a local coordinate system of the antenna array (AA) with respect to a global coordinate system.

11. The method according to claim 10, wherein the determined antenna orientation comprises an azimuth angle and a tilt angle of the antenna array (AA) with respect to the global coordinate system.

12. The method according to claim 10 or 11, further comprising:

- providing the determined antenna orientation to a positioning engine (LPE) during an initial setup phase and/or repeatedly.

13. The method according to claim 12, further comprising:

- storing the determined antenna orientation; and
- providing a change information to the positioning engine (LPE) if a further antenna orientation determined with the orientation sensor (OS) deviates from the stored antenna orientation.

14. Computer program product comprising instructions which, when executed on a processor of an anchor point having an antenna array (AA) and an orientation sensor (OS), cause the processor to perform the method according to any of claims 10 to 13.

15. Computer readable storage medium comprising the computer program product according to claim 14.

**Fig 1**

**Fig 2**

**Fig 3**

**Fig 4**

Fig 5

Fig 6

**Fig 7**

**Fig 8**

**Fig 9**

**Fig 10**

**Fig 11**

Europäisches
Patentamt

European
Patent Office

Office européen
des brevets

# EUROPEAN SEARCH REPORT

Application Number

**EP 21 21 2803**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/346268 A1 (HE WEI-HUNG [TW] ET AL) 14 November 2019 (2019-11-14) * paragraphs [0006] - [0033]; figures 1, 2, 3, 4 * ----- | 1-15 | INV. G01S1/02 G01S5/02 |
| X | US 2021/136600 A1 (LE VINH-PHUONG T [US] ET AL) 6 May 2021 (2021-05-06) * paragraphs [0017] - [0026], [0038] - [0062] * ----- | 1-15 | |

TECHNICAL FIELDS
SEARCHED        (IPC)

G01S

The present search report has been drawn up for all claims

| Place of search | Date of completion of the search | Examiner |
|---|---|---|
| Munich | 13 May 2022 | Winkelbauer, Andreas |

EPO FORM 1503 03.82 (P04C01)

## ANNEX TO THE EUROPEAN SEARCH REPORT
## ON EUROPEAN PATENT APPLICATION NO.

EP 21 21 2803

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2022

| Patent document cited in search report | | Publication date | Patent family member(s) | | Publication date |
|---|---|---|---|---|---|
| US 2019346268 | A1 | 14-11-2019 | TW 201947250 A | | 16-12-2019 |
| | | | US 2019346268 A1 | | 14-11-2019 |
| US 2021136600 | A1 | 06-05-2021 | NONE | | |

For more details about this annex : see Official Journal of the European Patent Office, No. 12/82